# EUROPEAN PATENT APPLICATION

(11) **EP 4 270 568 A2**
(43) Date of publication of application: **01.11.2023**
(21) Application number: 21911585.4
(22) Date of filing: 23.12.2021
(51) Int. Cl.: H01M 10/04

(54) **UNIT CELL, AND METHOD AND DEVICE FOR MANUFACTURING SAME**

(30) Priority: 23.12.2020 KR 20200182656; 21.12.2021 KR 20210184174
(71) Applicant: LG Energy Solution, Ltd., Seoul 07335 (KR)
(72) Inventor: PARK, Dong Hyeuk, Daejeon 34122 (KR); LEE, Hyeon Jin, Daejeon 34122 (KR); PARK, Sung Chul, Daejeon 34122 (KR); KIM, Sang Wook, Daejeon 34122 (KR); YANG, Gi, Daejeon 34122 (KR)
(74) Representative: Goddar, Heinz J.
(86) International application number: PCT/KR2021/019763
(87) International publication number: WO 2022/139520

(57) **Abstract**

The present invention relates to an apparatus for manufacturing a unit cell, which cuts a lower separator and an upper separator between electrodes adjacent to each other in a process of manufacturing the unit cell provided in a state, in which the lower separator and the upper separator continuously move in a longitudinal direction, and the electrodes are stacked between the lower separator and the upper separator and on the upper separator, respectively, the apparatus comprising: a lower block disposed under the lower separator; and an upper block which is vertically aligned with the lower block above the upper separator and in which a lower end of a cutter is installed to be accessible to the inside and outside, wherein the upper block descends to press the separators to a surface of the lower block, wherein at least one or more of the upper block and the lower block is heated to a predetermined temperature so that pressed points of the separators are thermally fused, and the cutter protrudes from the upper block to perform cutting at points at which the separators are pressed.

## Description

### CROSS-REFERENCE TO RELATED APPLICATION

The present application claims the benefit of the priority of Korean Patent Application Nos. 10-2020-0182656, filed on December 23, 2020, and 10-2021-0184174, filed on December 21, 2021, which are hereby incorporated by reference in their entirety.

### TECHNICAL FIELD

The present invention relates to a method and apparatus for manufacturing a unit cell and a unit cell manufactured by the manufacturing apparatus, and more particularly, to a method and apparatus for manufacturing a unit cell, in which cutting is performed in a state in which bonding (sealing) between a lower separator and an upper separator is performed, or boding and cutting are performed at the same time to prevent the separator from being folded, and a unit cell.

### BACKGROUND ART

Recently, many studies on secondary batteries are being carried out because the secondary batteries are rechargeable unlike primarily batteries, and also, the possibility of compact size and high capacity is high. As technology development and demands for mobile devices increase, the demands for secondary batteries as energy sources are rapidly increasing.

Such a secondary battery is configured so that an electrode assembly and an electrolyte are embedded in a case (for example, a pouch, a can, and the like). The electrode assembly mounted in the case is repeatedly chargeable and dischargeable because of a structure in which a positive electrode/a separator/a negative electrode are stacked. The electrode assembly is manufactured in various manners. However, generally, the electrode assembly may be manufactured in a manner in which, after a unit cell 4 is prepared in advance, a plurality of units 4 are stacked to manufacture the electrode assembly.

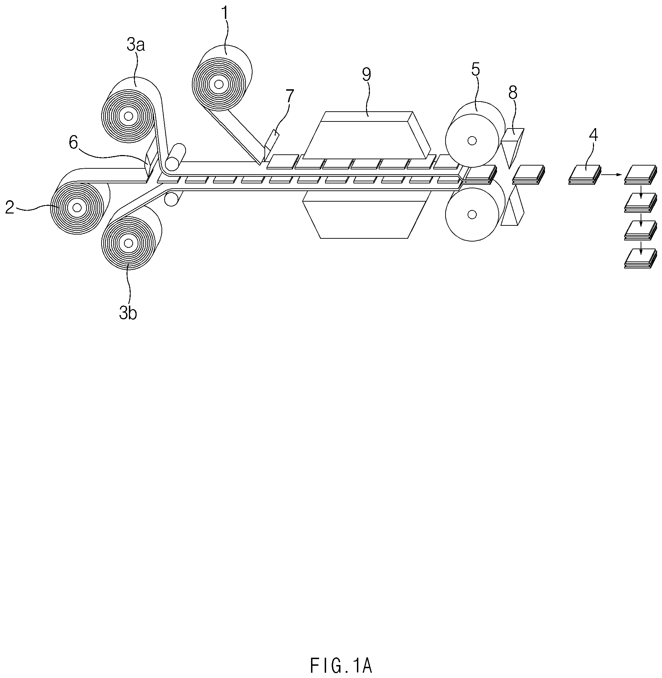

That is, referring to FIG. 1a, which illustrates a state in which a unit cell is manufactured according to the related art, in a method for manufacturing the unit cell 4 according to the related art, a positive electrode 1, an upper separator 3a, a negative electrode 2, and a lower separator 3 are continuously wound to be supplied in a state in which each of the positive electrode 1, the upper separator 3a, the negative electrode 2, and the lower separator 3b is wound in the form of a roll (however, stacking positions of the positive electrode and the negative electrode may be changed).

Here, the separators 3 (3a and 3b) are continuously supplied without disconnection, the negative electrode 2 is supplied between the upper separator 3a and the lower separator 3b, and the positive electrode 1 is supplied onto the upper separator 3a.

Here, the separators 3 are continuously supplied without being cut. On the other hand, the positive electrode 1 and the negative electrode 2 are provided in a state of being cut to predetermined sizes by respective cutters 6 and 7, respectively. The positive electrode 1 and the negative electrode 2 are paired and stacked vertically with the upper separator 3a therebetween and are disposed to be spaced a predetermined distance from the positive electrode 1 and the negative electrode 2, which are paired to be adjacent to each other.

That is, the separators 3 are continuously connected, and the negative electrode 2 and the positive electrode 1 pass through a laminating device 9 in a state of being spaced a predetermined distance from the negative electrode 2 and the positive electrode 1. In the laminating device 9, heat and a pressure are applied so that the negative electrode 2 and the positive electrode 1 are bended to contact points with the separators 3.

After the positive electrode 1 and the negative electrode 2 pass through the laminating device 9 in the state in which the positive electrode 1 and the negative electrode 2 are bonded to the separators 3, the separators 3 are cut to be provided as individual unit cells between the positive electrode 1 and the positive electrode 1, which are adjacent to each other.

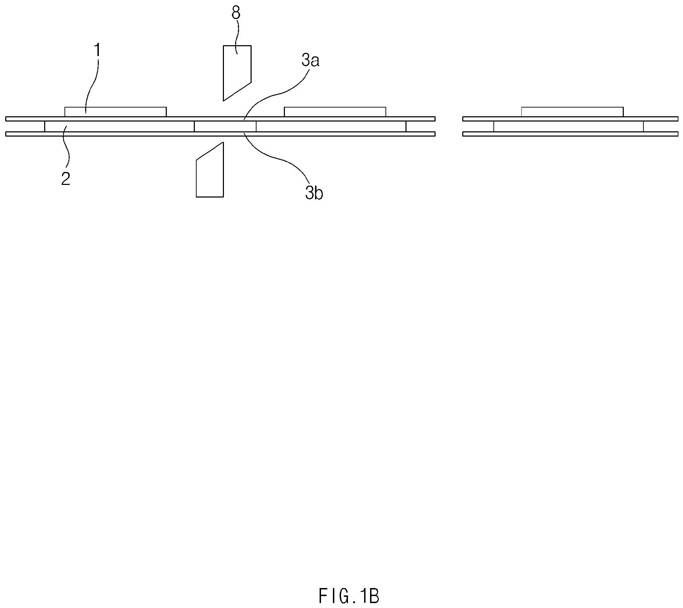

That is, as illustrated in FIG. 1b, which illustrates a shape of a cutter, which cuts the separators, according to the related art, after the laminating (bonding) of the electrodes 1 and 2 and the separators 3 due to the heat and pressure are performed, the separators 3 are cut between the electrodes adjacent to each other to manufacture the individual unit cells 4.

However, the cutter 8 according to the related art has a structure in which the pressure is applied vertically to cut the separators 3. Thus, when any one of the separators 3a and 3b is not properly cut, there is a problem in that the separators 3a and 3b are folded in a direction in which the pressure is applied.

After the unit cells 4 are manufactured, since the plurality of unit cells 4 are stacked to be manufactured as an electrode assembly, the folding of the separators 3 occurs, and thus, when a portion of the negative electrode 2 or the positive electrode 1 is exposed, short circuit occurs inside the electrode assembly.

That is, referring to FIG. 1a, the points at which the separator 3 and the electrodes 1 and 2 are in contact with each other even after passing through a pressing roller 5 by passing through the laminating device 9. However, in the structure according to the related art, the upper separator 3a and the lower separator 3b are not bonded as illustrated in FIG. 1b, and thus, there is a problem in that the separators are folded.

### DISCLOSURE OF THE INVENTION

### TECHNICAL PROBLEM

Accordingly, a main object of the present invention is to provide a method and apparatus for manufacturing a unit cell, which is capable of preventing upper and lower separators from being folded, thereby preventing short circuit from occurring when the separators are cut, and a unit cell capable of being manufactured through the manufacturing apparatus.

### TECHNICAL SOLUTION

An apparatus for manufacturing a unit cell, which cuts a lower separator and an upper separator between electrodes (a positive electrode and a negative electrode) adjacent to each other (in a longitudinal direction of the separator) in a process of manufacturing the unit cell provided in a state (i.e., a stacked state in the order of the 'positive electrode/upper separator/negative electrode/lower separator' or the `negative electrode/upper separator/positive electrode/lower separator' from top to bottom), in which the lower separator and the upper separator continuously move in a longitudinal direction, and the electrodes are stacked between the lower separator and the upper separator and on the upper separator, respectively, according to the present invention for achieving the above object comprises: a lower block disposed under the lower separator; and an upper block which is vertically aligned with the lower block above the upper separator and in which a lower end of a cutter is installed to be accessible to the inside and outside, wherein the upper block descends to press the separators to a surface of the lower block, wherein at least one or more of the upper block and the lower block is heated to a predetermined temperature so that pressed points of the separators are thermally fused, and the cutter protrudes from the upper block to perform cutting at points at which the separators are pressed.

The lower block may be heated to a predetermined temperature, and the upper block may not be heated. The upper block may be heated to a predetermined temperature, and the lower block may not be heated. Both the upper block and the lower block may be heated to a predetermined temperature.

The pressing of the separators may be performed by the upper block, and after a predetermined time elapses, the cutter may protrude to cut the point at which the thermal fusion is performed.

A groove may be formed in a top surface of the lower block so that the cutter is accommodated so as not to be in contact the lower block when the cutter protrudes.

The cutter may be maintained in a state of being accommodated so as not to protrude from the upper block by elasticity of a spring, and when the upper block presses the separators to the lower block, the cutter may protrude. That is, the cutter may be configured to be slidable in a known solenoid method using a spring and an electromagnet.

Furthermore, the present invention provides a unit cell that is capable of being manufactured through the apparatus for manufacturing the unit cell having the above configuration.

A unit cell, in which a lower electrode is stacked between a lower separator and an upper separator, and an upper electrode is stacked on the upper separator, provided in the present invention comprises: a sealing part formed by applying heat and a pressure to an end of an edge of the lower separator protruding from the lower electrode and an end of an edge of the upper separator protruding from the lower electrode, wherein the upper separator has one end connected to the sealing part and the other end connected to face an upper side to form an arch.

Heat may be applied to the connection part. The connection part to which the heat is applied may be stiffened than other portions to maintain a shape of the connection part, and thus, flapping of the sealing part may be prevented.

In addition, a method for manufacturing a unit cell provided in the present invention may be provided.

A method for manufacturing a unit cell, in which electrodes are stacked between a lower separator and an upper separator and on the upper separator, respectively, according to the present invention comprises: a process of providing the electrodes and the separators in a state in which the lower separator and the upper separator continuously move in a longitudinal direction, and the electrodes are stacked between the lower separator and the upper separator and on the upper separator, respectively; and a process of allowing the electrodes and the separators to pass between the lower block disposed under the lower separator and the upper block disposed to be vertically aligned with the lower block above the upper separator, wherein the upper block descends to press the separators to a surface of the lower block between the electrodes adjacent to each other, and a cutter protrudes from the lower block to cut the separators, and at least one or more of the upper block and the lower block is heated to a predetermined temperature to perform thermal fusion at points at which the separators are pressed, and cutter cuts the points at which the thermal fusion is performed.

The predetermined temperature to which the upper block or the lower block is heated may be set in a range of 70°C to 110°C.

A time taken to allow the upper block to press the separators to the lower block may be 0.05 seconds to 0.1 seconds.

### ADVANTAGEOUS EFFECTS

In the present invention having the above-described configuration, since the cutter cuts the upper separator and the lower separator in the state in which the upper separator and the lower separator are fixedly bonded between the upper block and the lower block, the possibility of the folding of the separators may be reduced.

In addition, since the lower block is in the heated state, and the upper block is pressed to achieve the thermal fusion of the separators, the cut portions of the upper separator and lower separator are bonded even after the cutting is performed to fundamentally prevent the possibility of the folding of the separators from occurring.

In addition, the upper block as well as the lower block may be heated so that the thermal fusion of the separators are performed more quickly.

In addition, the unit cell provided in the present invention may be maintained in the uniform shape of the manufactured unit cell by forming the connection part connected to the sealing part on the upper separator. The connection part may be stiffened than other portions by applying the heat to prevent the folding from occurring, and the heat and pressure may be applied to connect the thermally fused sealing part to the other portion to provide the function of mitigating the hardness difference. That is, since the hardness of the sealing part is the highest, the hardness of the connection part is medium, and the hardness of the remaining portion is the lowest, the connection part may have the effect of providing the mitigating function in change of the hardness.

### BRIEF DESCRIPTION OF THE DRAWINGS

FIG. 1a is a schematic view illustrating a state in which a unit cell is manufactured through a method according to a related art.
FIG. 1b is a simplified side view illustrating a shape of a cutter, which cuts a separator, according to the related art.
FIG. 2 is a simplified left view of an apparatus for manufacturing a unit cell and a bottom surface of an upper block according to an embodiment of the present invention.
FIG. 3 is a view illustrating a state <I> when the upper block ascends above a lower block, a state <II> when the upper block descends, a state <IV> when a cutter returns to its original position, and a state <V> when the upper block returns to its original position.
FIG. 4 is a view illustrating a state in which the upper block descends to press separators to the lower block between adjacent electrodes (between adjacent positive electrodes or between adjacent negative electrodes), and a cutter protrudes from the upper block to perform cutting at portions at which the separators are thermally fused.
FIG. 5 is a view illustrating a shape of a side surface of the unit cell according to an embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method and apparatus for manufacturing a unit cell 4, in which electrodes 1 and 2 are respectively stacked between a lower separator 3b and an upper separator 3a and on the upper separator 3a, and a unit cell capable of being manufactured through the manufacturing apparatus. Hereinafter, embodiments according to the present invention will be described in more detail with reference to the accompanying drawings.

### First embodiment

The present invention provides a method for manufacturing a unit cell according to a first embodiment. The apparatus for manufacturing the unit cell provided in this embodiment may replace a pressing roller 5 and a cutter 8 for cutting the separator 3 or only the cutter 8 in a process illustrated in FIG. 1a.

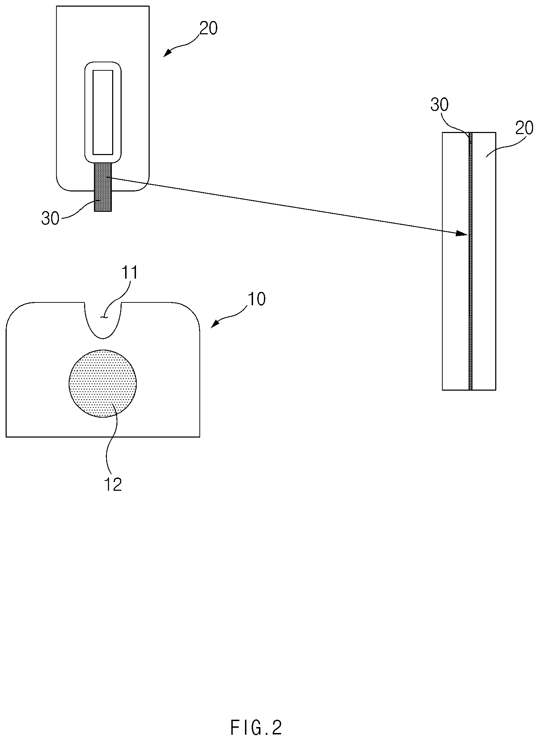

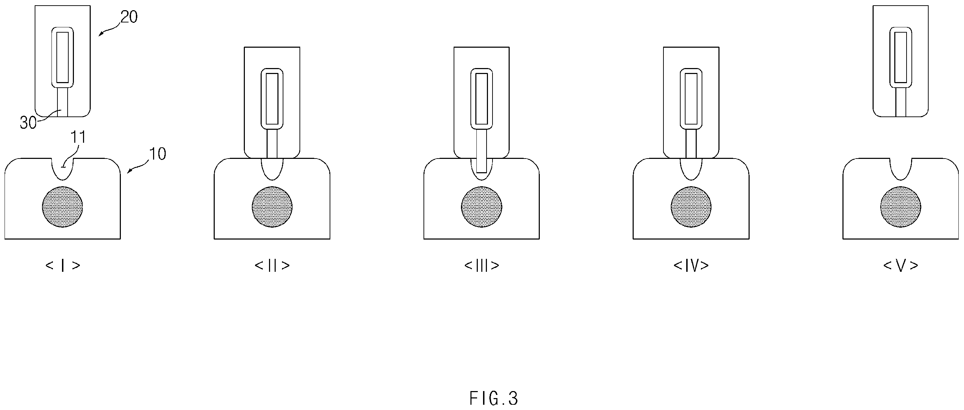

FIG. 2 is a simplified left view of the apparatus for manufacturing the unit cell and a bottom surface of an upper block according to an embodiment of the present invention, and FIG. 3 is a view illustrating a state <I> when the upper block ascends above a lower block, a state <II> when the upper block descends, a state <IV> when a cutter returns to its original position, and a state <V> when the upper block returns to its original position.

As illustrated in the drawings, the apparatus for manufacturing the unit cell according to the present invention is an apparatus for manufacturing a unit cell, which cuts a lower separator 3b and an upper separator 3a between electrodes 1 and 2 adjacent to each other in a longitudinal direction of each of the separators 3 in a manufacturing process, and comprises a lower block 10 and an upper block 20.

That is, as the apparatus for manufacturing the unit cell, which is provided in this embodiment, is provided at a position disposed in the cutter 8 according to the related art, the lower separator 3b and the upper separator 3a continuously move in the longitudinal direction and are provided in a state in which a positive electrode 1 and a negative electrode 2 are stacked between the lower separator 3b and the upper separator 3a and on the upper separator 3a, respectively, i.e., a state in which a 'positive electrode/upper separator/negative electrode/lower separator' or a `negative electrode/upper separator/positive electrode/lower separator' are sequentially stacked from top to bottom.

The lower block 10 is disposed under the lower separator 3b and is configured to be provided with a built-in heater 12 so that a surface (particularly, a top surface) thereof is heated to a predetermined temperature or configured to be heated by heat transferred from a separate heater that is provided at the outside.

The lower block 10 has a structure in which a groove 11 is formed in a top surface so that an end of the cutter 30 is accommodated without being in contact with the end when protruding from the upper block 20, which will be described later, and the top surface has a plane to support the lower separator 3b in a flat state.

Also, the upper block 20 is vertically aligned with the lower block 10 above the upper separator 3a and has a structure in which the end of the cutter 30 is installed to be accessible to the inside and outside.

Furthermore, although not shown in the drawings, the upper block 20 is also configured to be provided with a built-in heater or configured to be heated by heat transferred from a separate heater that is provided at the outside, like the lower block 10.

The cutter 30 is configured to be maintained in a state of being accommodated without protruding from a bottom surface of the upper block 20 by elastic force of a spring (not shown) and configured so that, when the upper block 20 descends, the end protrudes to the outside of a bottom surface of the upper block by a physical device, an electric device, etc.

For example, an upper end of the cutter 30 may be connected to a tensile spring (not shown) so as to be maintained in the state accommodated in the upper block 20. That is, the upper end of the cutter 30 may be connected to a solenoid device to operate so that, when current flows through the solenoid, a lower end of the cutter 30 protrudes to the outside of the upper block 20 because electromagnetic force overcomes elastic force of the tensile spring. The cutter 30 may have a linear structure to correspond to a width of the separator 3, and although the end is illustrated as being blunt in the drawings, the end of the cutter 30 may have a pointed shape in reality. Alternatively, the device for allowing the cutter 30 to protrude may be implemented not only as the solenoid device using an electromagnet, but also as an electric device using a motor and a gear, a cylinder device using a hydraulic pressure or pneumatic pressure, and the like.

The upper block 20 may be connected to a lift device (not shown) so as to be elevated vertically. As a result, as illustrated in FIG. 3, the upper block may be spaced a predetermined distance upward from the lower block 10 (<I> state), may descend to be in contact with a top surface of the lower block 10 (<II> state), and may allow the lower end of the cutter 30 to protrude downward in the descending state (<III> state).

When the upper block 20 descends, the upper block 20 may press the separators 3a and 3b with a sufficient pressure so that the separators 3a and 3b are thermally fused. Here, at least one or more of the upper block 20 and the lower block 10 is in a state that is previously heated to a predetermined temperature.

And, when the cutting is completed, the cutter 30 returns to its original position (<IV> state), and the upper block 20 also returns to its initial position (<V> state).

As described above, a surface of at least one of the upper block 20 or the lower block 10 is heated by the heater. Here, heat may be concentrated to the surface the upper block 20, which is in contact with each of the upper separator 3a and the lower separator 3b. Particularly, when the upper block 20 is cut in the heated state, a unit cell provided with a sealing part 3d and a connection part 3c, which are provided in a third embodiment below, may be manufactured.

For reference, the lifting device for elevating the upper block 20 may be a motor or a hydraulic or pneumatic cylinder. In addition, a separate control and measuring equipment for precisely controlling straightness of the upper block 20 when ascending and descending may be added. In addition, the lower block 10 as well as the upper block 20 may be made of non-ferrous/ferrous materials with high specific heat, such as NAK80 or Becu25, to achieve efficient heat transfer.

In addition, a known heating method may be applied to the heater 12 comprised in the lower block 10 and the heater comprised in the upper block 20 such as a sheath heater or oil medium heater.

Here, a point to which heat is applied to the separator 3 may be heated in a range of 70°C to 110°C. The reason in which the temperature is limited to the range of 70°C to 110°C is because, when the temperature is less than 70°C, it is difficult to achieve efficient thermal fusion of the separator 3, and when the temperature exceeds 110°C, it is difficult to seal the separator 3 due to the melted separator 3. The temperature range may be adjusted according to a pressure generated between the upper block 20 and the lower block 10.

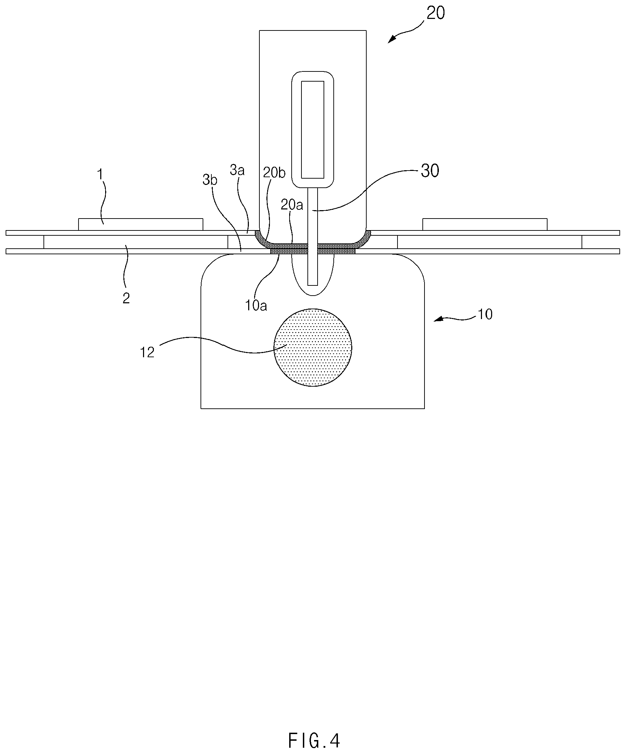

FIG. 4 is a view illustrating a state in which the upper block 20 descends to press the separators 3a and 3b to a top surface of the lower block 10 between adjacent electrodes (between adjacent positive electrodes or between adjacent negative electrodes), and the cutter 30 protrudes from the upper block 20 to perform cutting at portions at which the separators 3a and 3b are thermally fused. Here, the cutting may be performed to be thermally fused after or together with the thermal fusion.

When an operation state of the manufacturing apparatus provided in this embodiment is described with reference to FIGS. 3 and 4, the upper block 20 stands by in a state of ascending above the lower block 10 to prevent interference from occurring while the separators 3a and 3b and the electrodes 1 and 2 are transferred (see the state <I> of FIG. 3).

When only the upper separator 3a and the lower separator 3b are disposed between the lower block 10 and the upper block 20 and between the positive electrode 1 and the positive electrode 1, which are adjacent to each other (or between the negative electrode and the negative electrode), the movement of the separators 3a and 3b is temporarily stopped.

Next, the upper block 20 descends. Here, since only the lower block 10 or at least one or both of the lower block 10 and the upper block 20 is in the heated state, an area (a portion shaded in FIG. 4), on which the pressing is performed, on the separator 3 is heated. Since the pressing is performed by the heated upper block 20 in this manner, the thermal fusion (sealing) is performed at the portions at which the upper separator 3a and the lower separator 3b are in contact with each other.

Finally, as illustrated in FIG. 4, the lower end of the cutter 30 protrudes to pass through the thermally fused portion to cut the separator 3.

Here, it is preferable that the separator 3 is cut after being sealed. However, since the separator 3 is in the fixed state between the upper block 20 and the lower block 10, the sealing and cutting may be performed at the same time.

### Second embodiment

In the present invention, a method for manufacturing a unit cell, which is capable of manufacturing the unit cell using the above-described manufacturing apparatus is provided as a second embodiment.

The manufacturing method provided in this embodiment comprises a process of laminating a separator 3 and electrodes 1 and 2 after stacking the separator 3 and the electrodes 1 and 2 in a predetermined order to provide the separator 3 and the electrodes 1 and 2 and a process of allowing the electrodes 1 and 2 and the separator 3 to pass between a lower block 10 and an upper block 20.

That is, In the process of providing the separator 3 and the electrodes 1 and 2, a lower separator 3b and an upper separator 3a continuously move in a longitudinal direction, and also, the electrodes 1 and 2 and the separators 3 are provided in a state in which the electrodes 1 and 2 are stacked between the lower separator 3b and the upper separator 3a and on the upper separators 3a, respectively.

In addition, in the process of allowing the electrodes 1 and 2 and the separator 3 to pass between the lower block 10 and the upper block 20, the electrodes 1 and 2 and the separator 3 pass between the lower block 10 disposed under the lower separator 3b and the upper block 20 disposed above the upper separator 3a so as to be vertically aligned with the lower block 10.

In this process, the upper block 20 descends between the electrodes 1 and 2 adjacent to each other to press a surface of the lower block 10, and a lower end of a cutter 30 protrudes from the upper block 20 to cut the separators 3a and 3b. Here, at least one or both of the lower block 10 and the upper block 20 are heated to a predetermined temperature, and the upper block 20 is pressed to a pressure at which the separators 3a and 3b are thermally fused.

The lower block 10 and/or the upper block 20 is/are heated in a range of 70°C to 110°C, and a time taken to allow the upper block 20 to press the separators to the lower block 10 may be 0.05 seconds to 0.1 seconds. The upper block 20 presses the separators 3a and 3b to fuse the separators 3a and 3b to a surface of the lower block 10, and simultaneously, the cutter 30 protrudes, or after the thermal fusion is performed, the cutter 30 protrudes.

For reference, a pressure at which the upper block 20 presses the lower block 10 may be set in a range of 5 kg to 50 kg per unit area (1 cm² or 1 m²), and a sealing area may be flexibly set according to intervals between the adjacent electrodes 1 and 2.

### Third embodiment

In the present invention, a unit cell capable of manufactured using the method and apparatus for manufacturing the unit cell, which have been described above, is provided as a third embodiment.

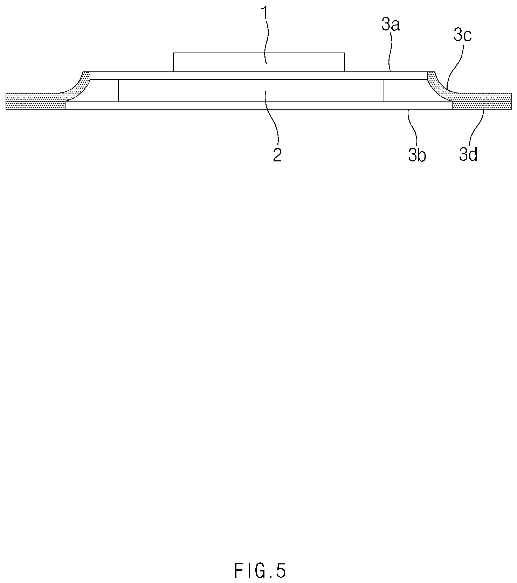

FIG. 5 is a view illustrating a shape of a side surface of a unit cell according to an embodiment of the present invention.

Referring to FIG. 5, the unit cell provided in this embodiment has a structure, in which a lower electrode is stacked between a lower separator 3b and an upper separator 3a, and an upper electrode 1 is stacked on the upper separator.

For reference, the lower electrode that is referred to herein refers to an electrode placed between the upper separator 3a, which corresponds to a relatively low side, and the lower separator 3b, and the upper electrode refers to an electrode placed on the upper separator 3a, which corresponds to a relatively high side. However, this structure does not mean in specifying a positive electrode or a negative electrode. That is, the lower electrode 2 may be one of a negative electrode or a positive electrode, and the upper electrode 1 may be the other one of the negative electrode or the positive electrode.

In addition, edges of the upper separator 3a and the lower separator 3b are boned to each other to form a sealing part 3d.

That is, heat and a pressure are applied to an end of the edge end of the lower separator 3b protruding from the lower electrode 2 and an end of the edge of the upper separator 3a protruding from the lower electrode 2 to thermally fuse the ends so that the sealing part 3d is formed on each of both sides. The sealing part 3d is formed by being pressed by the lower block 10 and the upper block 20, which are described above, and cut by a cutter 30.

In addition, a lower end of the upper separator 3a is connected to the sealing part 3d, and the other end of the upper separator 3a is connected face an upper side to form an arch.

That is, referring to FIG. 4, in the manufacturing apparatus provided in the first embodiment, when the upper block 20 is heated, the upper separator 3a and the lower separator 3b are thermally fused between a flat portion 20a and a flat portion 10a of the lower block to form a sealing part 3d. Also, an edge 20b of the upper block 20, which is not in contact with the lower block 10 applies heat to the upper separator 3a. Here, as the upper block 20 is pressed, a predetermined tension is also applied to a point at which a connection part 3c is formed, and thus, the connection part 3c is subjected to tension and heat so as to be formed as an arch corresponding to an edge of the upper block 20.

Thus, the connection part 3c may be stiffened than other portions (to which heat is not applied), such as the sealing part 3d to which the heat and pressure are applied, and thus, a shape of the connection part 3c may be maintained.

Thus, as a unit cell provided in this embodiment is provided with the sealing part 3d and the connecting part 3c on both sides, manufacturing and cutting may be performed in a uniform form.

Also, the connection part 3c may be stiffened than other portions by applying the heat to prevent the folding from occurring, and the heat and pressure may be applied to connect the thermally fused sealing part to the other portion to provide the function of mitigating the hardness difference. That is, the stiffening of the sealing part 3d where heat and pressure is concentrated is the highest, the stiffening of the connection part 3c to which the pressure and heat are relatively weakly applied is intermediate, and the stiffening of the remaining portion is the lowest, and thus, the connection part 3c has an effect of providing a mitigation function in change of the stiffening.

In the present invention having the above-described configuration, since the cutter 30 cuts the separator 3 in a state in which the separator 3 is fixed between the upper block 20 and the lower block 10, the separator 3 may reduce possibility of folding.

In addition, since the lower block 10 and/or the upper block 20 are/is in the heated state, and the upper block 20 is pressed to achieve the thermal fusion of the separator, even after the cutting is performed, the cut portions of the upper separator 3a and the lower separator may be bonded to each other to fundamentally prevent the separator 3 from being folded.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Positive electrode
2: Negative electrode
3: Separator (3a: upper separator, 3b: lower separator)
10: Heating roller
11: Groove
12: Heater
20: Upper roller
30: cutter

## Claims

1. An apparatus for manufacturing a unit cell, which cuts a lower separator and an upper separator between electrodes adjacent to each other in a process of manufacturing the unit cell provided in a state, in which the lower separator and the upper separator continuously move in a longitudinal direction, and the electrodes are stacked between the lower separator and the upper separator and on the upper separator, respectively, the apparatus comprising:
a lower block disposed under the lower separator; and
an upper block which is vertically aligned with the lower block above the upper separator and in which a lower end of a cutter is installed to be accessible to the inside and outside,
wherein the upper block descends to press the separators to a surface of the lower block, wherein at least one or more of the upper block and the lower block is heated to a predetermined temperature so that pressed points of the separators are thermally fused, and the cutter protrudes from the upper block to perform cutting at points at which the separators are pressed.

2. The apparatus of claim 1, wherein the lower block is heated to a predetermined temperature, and
the upper block is not heated.

3. The apparatus of claim 1, wherein the upper block is heated to a predetermined temperature, and
the lower block is not heated.

4. The apparatus of claim 1, wherein both the upper block and the lower block are heated to a predetermined temperature.

5. The apparatus of claim 1, wherein the pressing of the separators are performed by the upper block, and
after a predetermined time elapses, the cutter protrudes to cut the point at which the thermal fusion is performed.

6. The apparatus of claim 1, wherein a groove is formed in a top surface of the lower block so that the cutter is accommodated so as not to be in contact the lower block when the cutter protrudes.

7. The apparatus of claim 1, wherein the cutter is maintained in a state of being accommodated so as not to protrude from the upper block by elasticity of a spring, and
when the upper block presses the separators to the lower block, the cutter protrudes.

8. A unit cell, in which a lower electrode is stacked between a lower separator and an upper separator, and an upper electrode is stacked on the upper separator, the unit cell comprising:
a sealing part formed by applying heat and a pressure to an end of an edge of the lower separator protruding from the lower electrode and an end of an edge of the upper separator protruding from the lower electrode,
wherein the upper separator has one end connected to the sealing part and the other end connected to face an upper side to form an arch.

9. The unit cell of claim 8, wherein heat is applied to the connection part.

10. A method for manufacturing a unit cell, in which electrodes are stacked between a lower separator and an upper separator and on the upper separator, respectively, the method comprising:
a process of providing the electrodes and the separators in a state in which the lower separator and the upper separator continuously move in a longitudinal direction, and the electrodes are stacked between the lower separator and the upper separator and on the upper separator, respectively; and
a process of allowing the electrodes and the separators to pass between the lower block disposed under the lower separator and the upper block disposed to be vertically aligned with the lower block above the upper separator,
wherein the upper block descends to press the separators to a surface of the lower block between the electrodes adjacent to each other, and a cutter protrudes from the lower block to cut the separators, and
at least one or more of the upper block and the lower block is heated to a predetermined temperature to perform thermal fusion at points at which the separators are pressed, and cutter cuts the points at which the thermal fusion is performed.

11. The method of claim 10, wherein the predetermined temperature to which the upper block or the lower block is heated is set in a range of 70°C to 110°C.

12. The method of claim 10, wherein a time taken to allow the upper block to press the separators to the lower block is 0.05 seconds to 0.1 seconds.
